# EUROPEAN PATENT APPLICATION

(11) **EP 4 428 721 A1**
(43) Date of publication of application: **11.09.2024**
(21) Application number: 23160746.6
(22) Date of filing: 08.03.2023
(51) Int. Cl.: G06F 21/10, G06F 21/53, G06F 21/57, H04L 9/40, H04W 12/08, H04W 84/18

(54) **A HARDWARE ACCESS MANAGEMENT METHOD**

(71) Applicant: Siemens Aktiengesellschaft, 80333 München (DE)
(72) Inventor: Hangauer, Andreas, 80634 München (DE); Mößbauer, Felix, 85570 Markt Schwaben (DE); Preclik, Tobias, 91085 Weisendorf (DE); Schüle, Tobias, 80636 München (DE)
(74) Representative: Siemens Patent Attorneys

(57) **Abstract**

A hardware access management system (9) and method for a sandboxed edge-based computing system (10) comprising a device service (7) adapted to provide information about hardware resources available in the edge-based computing system (10);an allocator service (5) adapted to map the available hardware resources to edge applications; and a runtime wrapper (6) adapted to wrap a system runtime of an edge application run as a sandboxed process in a sandboxed edge system core (1) of the edge-based computing system(10).

## Description

The invention relates to a computer-implemented hardware access management method for a sandboxed edge-based computing system and a hardware access management system for a sandboxed edge-based computing system.

Computer systems for data acquisition, processing, transmission, and control, which are located close to attached field devices such as sensors and actuators, are referred to as Edge systems. An industrial edge system can run on many kinds of hardware resources integrated in controllers and HMIs, on industrial PCs in different performance classes, and on certified edge devices.

Edge based systems can be realized as open systems, meaning that users can install and run own or third-party applications. As a key feature, edge-based systems provide an infrastructure to administer potentially many edge devices throughout a site, e.g., a shop floor. The shop floor refers to the area of a factory where production takes place. This includes installation and management of application programs from a central management system as well as remote administration of the edge devices at the site.

Such edge-based systems often support a multitude of user roles with fine-grained settings of access rights. This includes a user role providing access rights for accessing hardware settings, configuring edge devices, installing application programs, starting and stopping application programs, accessing application programs, and other rights.

An important aspect of conventional edge-based systems is that user-defined and hence unverified applications shall run in a protected environment. This serves the purpose of enhancing system robustness in case that user defined applications do not behave cooperatively, and further increases system safety of the edge-based system, in particular if malicious applications try to extract secret data and/or aim to gain control over the hardware.

For this reason, conventional edge applications typically do not have access to peripheral hardware resources on the edge device and can communicate with the outside world only via limited means such as IP data traffic through an IT infrastructure. A workaround is to run all edge applications that require access to hardware resources as privileged processes. However, this defeats the purpose of having a protected sandboxed system in the first place and moreover results in strong disadvantages regarding system security and system robustness of the edge-based system.

However, there is an increasing demand for providing edge applications with controlled access to selected hardware resources such as hardware accelerators used for machine learning. Furthermore, real-time or near real-time capable applications often require exclusive use of certain hardware such as network interfaces or CPU cores.

Accordingly, it is an object to provide a method and system providing edge applications with a controlled access to hardware resources of an edge-based system without compromising system security and/or system robustness of the edge-based system.

This object is achieved by a computer-implemented method comprising the features of claim 1.

The invention provides according to a first aspect a computer-implemented hardware access management method for a sandboxed edge-based computing system comprising the steps of: providing by a device service information about hardware resources available in the edge-based computing system;
mapping by an allocator service the available hardware resources to edge applications; and
wrapping by a runtime wrapper a runtime of an edge application run as a sandboxed process in a sandboxed edge system core.

In a possible embodiment of the computer-implemented hardware access management method according to the first aspect of the present invention, the device service is a stateless service and runs in a privileged mode outside the sandboxed edge system core.

In a possible embodiment of the computer-implemented hardware access management method according to the first aspect of the present invention, the device service comprises stateless device plug-ins which provide information for a certain hardware resource class.

In a possible embodiment of the computer-implemented hardware access management method according to the first aspect of the present invention, the allocator service is a state-based service and runs in the sandboxed edge system core.

In a possible embodiment of the computer-implemented hardware access management method according to the first aspect of the present invention, the allocator service performs the mapping between edge applications and hardware resources.

In a possible embodiment of the computer-implemented hardware access management method according to the first aspect of the present invention, the runtime wrapper is a stateless service and runs outside the sandboxed edge system core.

In a possible embodiment of the computer-implemented hardware access management method, according to the first aspect of the present invention, the edge system core of the edge-based computation system comprises a user interface for a user and a communication interface for remote control.

In a possible embodiment of the computer-implemented hardware access management method according to the first aspect of the present invention, the edge system core of the edge-based computation system comprises an application manager for edge applications run as sandboxed processes in the sandboxed edge system core according to a wrapped system runtime provided by the runtime wrapper.

In a possible embodiment of the computer-implemented hardware access management method according to the first aspect of the present invention, an edge application specifies desired hardware resources in a resource claim.

In a possible embodiment of the computer-implemented hardware access management method according to the first aspect of the present invention, the runtime wrapper sends a call to the allocator service with resource claims indicating hardware resources desired by one or more edge applications.

In a possible embodiment of the computer-implemented hardware access management method according to the first aspect of the present invention in case that the allocator service succeeds in allocating the desired hardware resources specified by an edge application in a resource claim, it returns device mapping information which is passed onto a lower-level command which starts the sandboxed process with the requested hardware resources being marked as unavailable and being enabled for use by the sandboxed process according to the device mapping information.

In a possible embodiment of the computer-implemented hardware access management method according to the first aspect of the present invention upon termination of a sandboxed process, the runtime wrapper informs the allocator service, and the hardware resources occupied by the terminated sandboxed process are marked again as available.

The invention provides according to a further aspect a hardware access management system for a sandboxed edge-based computing system comprising:
a device service adapted to provide information about hardware resources available in the edge-based computing system;
an allocator service adapted to map the available hardware resources to edge applications; and
a runtime wrapper adapted to wrap a system runtime of an edge application run as a sandboxed process in a sandboxed edge system core of the edge-based computing system.

The invention provides according to a further aspect an edge-based computing system comprising a sandboxed edge system core having an allocator service run in the sandboxed edge system core) and adapted to map available hardware resources indicated by a device service being run outside the sandboxed edge system core to edge applications in response to resource claims indicating hardware resources required by edge applications received by the allocator service from a runtime wrapper being run outside the sandboxed edge system core and adapted to wrap a system runtime of the edge application run as a sandboxed process in the sandboxed edge system core of the edge-based computing system.

Embodiments of the method and system according to the different aspects of the present invention are described in the following in more detail with reference to the enclosed fig-ures:
- Fig.1: shows a flowchart of a possible embodiment of the computer-implemented method according to the present invention;
- Fig.2: shows a schematic diagram for illustrating an exemplary embodiment of the system according to a further aspect of the present invention.

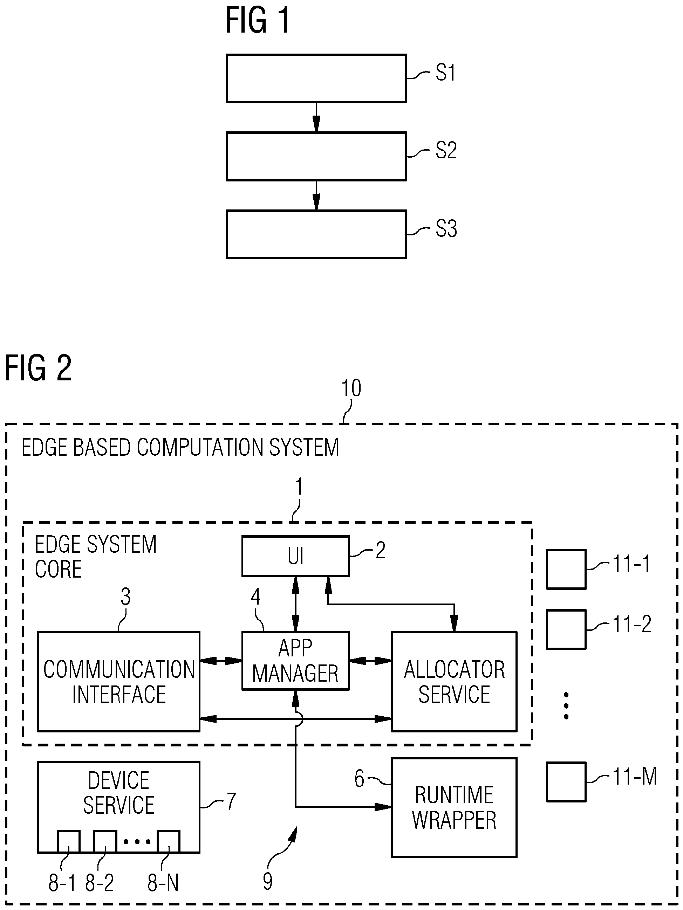

As illustrated in Fig.1 a computer-implemented hardware access management method for a sandboxed edge-based computing system 10 according to a first aspect of the present invention as illustrated in Fig.2. The computer-implemented hardware access management method can comprise in a possible embodiment three main steps.

In a first step S1 information about hardware resources available in the edge-based computing system is provided by a device service 7.

In a second step S2 the available hardware resources are mapped to edge applications by an allocator service 5.

In a third step S3 a system runtime of an edge application run as a sandboxed process in a sandboxed edge system core 1 is wrapped by a runtime wrapper 6.

Fig. 2 illustrates an exemplary embodiment of a hardware access management system 9 or an edge-based computing system 10 according to a second aspect of the present invention.

The edge-based computing system 10 comprises an edge system core 1 as shown in Fig.2. In the illustrated embodiment the edge system core 1 comprises a user interface 2 for a user and a communication interface 3 for providing remote control. The edge system core 1 of the edge-based computation system 10 comprises an application manager 4 adapted to manage edge applications run on edge devices 11 of the edge-based computing system 10. The edge system core 1 further comprises a connected allocator service 5 adapted to communicate with a runtime wrapper 6. The allocator service 5 is further able to communicate with a device service 7 comprising device plug-ins 8-1 to 8-N. The runtime wrapper 6 is adapted to wrap the runtime of the sandboxed system core 1. The allocator service 5 runs in the sandboxed edge system core 1 and provides a state-based allocation function.

The edge-based computing system 10 comprises the edge system core 1 of Fig.2 and includes edge devices 11 connected with each other by means of a data and control bus. Each edge device 11 contains the edge system core 1 as well as the device service 7 and the runtime wrapper 6. The edge-based computing system 10 is adapted to operate on real-time data which may be generated by sensors or by client devices of users. Edge computing provides computational resources close to the end users and therefore can increase responsiveness and throughput of the edge applications. The edge platform 10 does significantly outperform a conventional cloud-based system.

Some edge applications rely on short response times, making edge computing a significantly more feasible option than cloud computing. Due to the nearness of the resources to the end users, sophisticated analytical tools and Artificial Intelligence tools can run be on the edge computing system 10 using a hardware access management system according to the present invention. In the edge-based computing system 10 data is processed where it is generated, i.e., at production machines, machine tools, processes, and plants. Edge computing does increase transparency over the entire production process and allows a user to evaluate quality parameters in real time during the production process. Real-time evaluation is achieved in the sense that a prescribed certain cycle time of the processing is never exceeded and is robust against other workloads on the same edge-device.

The industrial edge-based computing system 10 comprises an open, ready-to-use edge computing platform consisting of edge devices 11, edge applications, edge connectivity, and an application and device management infrastructure. The edge-based computing system 10 makes it easier to collect and analyze data from industrial resources, enables a faster and more reliable rollout of applications on the shop floor, and can provide a central management for edge devices 11 and edge applications with maximum scalability - without any need to intervene in an existing automation system.

In the industrial edge-based computing system 10, data can be processed directly in real time by a processor of the individual machine or by a processor of a controller of an edge device 11 connected to the respective machine M so that the processed data remains confidential. Employing an industrial edge-based computing system 10 as shown in Fig.2 lightens the burden on an IT infrastructure of the automation system because not all data must be transmitted via the IT network for further processing. A user can decide which data is processed locally at the edge device 11 and which is optionally transferred to a cloud for further processing.

An edge device 11 within an edge-based computing system 10 of an industrial facility can comprise in a possible embodiment a processor, a data memory, a memory for storing edge applications locally and interfaces, in particular USB interfaces, Ethernet interfaces or display ports. The edge device 11 comprises in a possible embodiment a local controller having at least one processor adapted to execute program code of an edge application loaded from a local program memory of the edge device 11. The program code of the edge application can be deployed in the local memory of the edge device 11 during a setup of the edge-based computing system 10 or distributed via a system bus of the edge-based computing system 10.

An edge application executed on a processor of the edge device 11 can process data in real time. An edge device 11 is connected via its interfaces and a system bus of the edge-based computing system 10 to other edge devices 11 for transport of data and for transmission of control commands. A controller of the edge device 11 comprising at least one processor can process data received from at least one other edge device 11, in particular a sensor, in real time to provide instantaneously control signals supplied to further edge devices 11, in particular actuators, of the edge-based computing system 10. An edge application run on the processor of the controller requires hardware resources within the respective edge device 11, in particular local processing resources and local memory resources, and hardware resources of other edge devices 11, in particular of peripheral hardware resources such as sensors.

There is a wide variety of different edge applications which can be executed by edge devices 11 of the edge-based computing system 10.

For instance, a performance insight edge application enables a user to analyze and optimize the performance of devices, in particular machines M, on the basis of currently available operating data. A user may define key performance indicators and use the application to analyze the performance and availability of the investigated devices or equipment.

For example, an energy management edge application can be used to record energy consumption of machines M distributed throughout the world. In this way, it is not only possible to achieve energy transparency, but also to optimize energy efficiency by means of a comprehensive analysis of energy consumption.

With a machine monitoring edge application, plant engineers and plant operators can monitor a momentary status of their machines that are in use around the world. Such an application allows to optimize a machine maintenance service for machines M based on current operating data to increase the machine's availability.

An anomaly detection edge application can support a user to detect anomalies. Such an edge application can use Artificial Intelligence (AI) to acquire comprehensive insights from data of manufacturing and production processes.

By using a data service edge application for an industrial edge-based computing system 10, data from connected machines M or devices can be stored and structured. Via API interfaces, other applications run on the edge device 11 can also use the storage function and a configured machine data structure.

An edge device 11 of the edge-based computation system 10 can comprise in a possible implementation built-in security features such as encryption or boot guard. Data losses and downtimes can be prevented by backup and restore services employing an industrial edge device management. The edge device 11 can further comprise in a possible embodiment a local user interface with front LEDs for efficient self-diagnostics and headless operation.

The runtime wrapper 6 of the hardware access management system 9 is adapted to wrap a runtime of an edge application run as a sandboxed process in the sandboxed edge system core 1. The sandbox mechanism is a security mechanism for separating running application programs in an effort to mitigate system failures and/or software vulnerabilities from spreading. The sandbox is provided to execute program code of the edge application, which may possibly be provided by unverified or untrusted third parties, suppliers, users or websites. The sandbox mechanism provides a tightly controlled set of resources for edge application programs to run in, such as available memory space in a data storage.

In a possible embodiment the sandbox system can support multiple system runtimes. This executable makes some modifications to configuration files and/or command line arguments and then executes the original system runtime executable.

In a further possible embodiment the sandbox system operates in a generic way where the system runtime is renamed and replaced by the wrapper executable. This wrapper then calls after modifications to configuration files and/or command line arguments in relation to the original system runtime.

The hardware resource access management 9 for an edge-based computation system 10 including edge devices 11 as illustrated in Fig.2 allows edge applications to utilize dedicated hardware accelerators, e.g., for artificial intelligence, when installed in the edge-based computation system 10.

Further, the hardware access management system 9 can allow edge applications to communicate with non-IP peripheral devices (e.g., via USB, CAN, ProfiNet), which subsume a large part of industrially used sensor devices to fulfil the edge system's core purpose of sensor data acquisition.

The hardware access management system 9 allows edge applications to specify their resource claims for hardware resources and the edge system administrator to override app originating resource claims.

The actual mapping of available hardware resources to edge applications is performed dynamically in the sense that resource claims of edge applications and the actual hardware resources of the edge device 11 are decoupled, so that edge applications can be deployed on an edge device 11 with heterogeneous hardware resources. The mapping of hardware resources to edge applications is performed in a deterministic manner, i.e., after a reboot of an edge device 11 and a re-start of all edge applications, the functionality is restored. In other words, race conditions from arbitrary app start order is avoided. Hardware resources can be requested from edge applications in a sharable manner. Even if sharing quotas cannot be enforced, a cooperative sharing is possible. Statistics on hardware resource utilization and hardware resource metadata is available to the edge-based computing system 10 and a user.

Mapping can be illustrated with the following example:

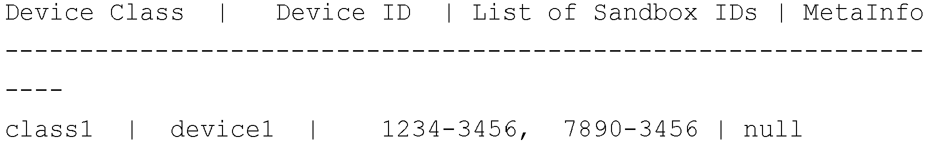

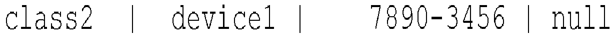

This means that Sandbox 7890-3456 has assigned the devices 'device1' of `class2' and 'device1' of 'class1' and Sandbox 1234-3456 has assigned only the device 'device1' of 'class1'. The column 'MetaInfo' can hold additional information that provides more context. For instance, the original device claims can be stored here (in case they are needed for future allocations or just for reference).

Edge applications need an active hardware resource management 9, as the edge devices 11 do in most cases not comprise standardized hardware since many different technical tasks have to be accomplished by the edge applications running on the edge devices 11 using different kinds of peripheral devices. Further, edge devices 11 may comprise different input/output connections for various requirements such as for instance near real-time control.

The edge applications require fine-grained access rules for the various user roles such as app developer vs. system administrator vs. device owner. The application developer specifies the needed hardware resources but does not know about the available hardware on the target edge-device and which hardware device the application should use. The system administrator knows specifics about the hardware on the target device such as which hardware is available for the applications and can configure hardware, set quotas and set labels (e.g., which network interface is connected to which logical network). Also, the system administrator may configure the allocator service 5 to designate certain hardware to certain applications. The device owner may restrict the application from using certain hardware. All these user-roles may work independently.

The edge system core 1 of the edge-based computation system 10 comprises the allocator service 5 adapted to communicate with the runtime wrapper 6. The allocator service 5 is able to communicate with the device service 7 comprising device plug-ins 8-1 to 8-N. The runtime wrapper 6 is adapted to wrap an edge application on a core system runtime as shown schematically in Fig.2. The allocator service 5 runs in the sandboxed edge system core 1 as shown in Fig.2.

The device service 7 is stateless and runs in a privileged mode. Its purpose is to provide information about the hardware resources available in the edge-based computation system 10. For modularity, the device service 7 supports in a preferred embodiment a plug-in mechanism, i.e., it aggregates information from a number N of likewise stateless plug-ins 8-1 to 8-N. The device service 7 does not run in the sandboxed edge system core 1 as shown in Fig.2.

The device service 7 is stateless. This means it gives always the same answer to the same request independently from the previous requests that were made (e.g. from the allocator service 5). The only exception is that if the underlying hardware or device associated drivers change or their configuration does change, then the device service 7 may answer accordingly with a different response. But this is because the hardware & device drivers to which the device service 7 provides an abstract interface are not stateless. The device service 7 itself is stateless.

Each plug-in 8-i of the device service 7 can provide information for a certain hardware resource class, in particular which resources of a specific class are available in an edge device 11. For each edge device 11, the device service 7 can list resource metadata, resource state information and the device mappings, mount points, and environment variables that need to be set when the sandboxed process of an edge application is started. Furthermore, the device service 7 allows to prepare a certain hardware resource for use (e.g., initialization, reset, or clearing of a memory). The hardware resource class specifications of a hardware resource class are completely hidden in the device plug-in 8-i. For the device plug-ins 8-i to be discovered, they register with the main device service 7, e.g., via an RPC protocol over a network connection. The device plug-ins 8-i provide a health status flag for each hardware resource. For example, the health status flag for a USB device can indicate whether the hardware resource is plugged in or not. The device service 7 provides an interface (RPC-based, for example) to be utilized by the allocator service 5. The basic capabilities are the same as for the device plug-ins 8-i, except that it supports a multitude of hardware resource classes. Additionally, the device service 7 may provide meta data and status information for each hardware resource, such as model and manufacturer name, health status, current temperature, and similar information. This information may be provided by the previously mentioned device plug-ins 8-i. A relevant aspect is that the device service 7 is resource class-agnostic, and all resource class-specific functionality is handled by the plug-ins 8-i.

The allocator service 5 is the only state-based service. It decides which hardware resources are mapped to which edge applications. The information which hardware resources and resource types are available is provided by the device service 7. Also, the allocator service 5 returns the mapping to be passed to the runtime wrapper 6. The allocator service 5 is state-based as it does the allocation. Its answers to requests (from system runtime) depend on previous requests. The state is the information which devices are currently occupied.

The allocator service 5 does not need a privileged access to the underlying host system, so it can run in a sandbox as well. The device service 7 on the other hand abstracts access/information about the host hardware and thus needs to have a privileged access to the host system and can therefore not effectively run in a sandbox environment.

If hardware resources of multiple edge devices 11 are requested by an edge application and the request can be fulfilled, the device mappings/mounts and environment variables are merged. Contradicting entries are flagged by the allocator service 5 as an error and the allocator service 5 indicates that the allocation is not possible.

The allocator service 5 provides means for device sharing. Shared requests may be enabled by fractional numbers in the resource claims. This indicates that only a fraction of a hardware resource is requested, and that the allocator service 5 can assign the same hardware resource to other services requesting a fractional amount of the hardware resource, provided that the total sum of the fractional requests does not exceed the total available hardware resource. Alternatively, applications may indicate via a flag that they are interested in using a shared device. In case only cooperative sharing is possible and resource limits cannot be enforced, a sharing namespace can be specified. In that case, the edge applications which share a common hardware resource must always come from the same namespace. This mechanism allows, for instance, to ensure that only (trusted) edge applications from the same developer participate in sharing a specific hardware resource. It may be possible to specify a pool of edge devices 11 for shared access and another pool of edge devices 11 for exclusive access during edge device configuration. The hardware resource allocation can then be done in a round robin fashion and the target edge device pool is selected depending on whether an edge application requests a shared or an exclusive resource. Optionally, the allocator service 5 may periodically check the resource usage of the service, and if the usage exceeds a system administrator-specified limit or the limit specified by, either the system administrator is informed about this state, or the edge application is terminated or restarted automatically.

After an edge application has been started and the allocation of hardware resources has been carried out successfully, the device mappings are stored as device hints. This associates hardware resources to edge applications. If there is no device hint for the edge application to be started, resource allocation can be performed in a two-pass process. A first pass iterates over all hardware resources which are not itself part of a resource hint of another resource claim made by another edge application. If no match is found, the iteration takes place over the remaining hardware resources. When all resource claims of the edge applications can be fulfilled, the hardware resource allocation is successful, and the mapping information is aggregated and passed by the allocator service 5 to the runtime wrapper 6. If there are resource hints for an edge application at a certain allocation request, the availability of the hardware resource indicated by the device hint is checked by the allocation service 5. If it fits, the hardware resource is selected.

At a start of the allocator service 5, it is checked in a possible embodiment for each device type if the list of hardware resources has changed. If so, all resource or device hints corresponding to this device type may be removed automatically or after intervention by a system administrator. To avoid dependency on the application startup order and potential race conditions, the hardware resource allocation can be done at the installation time of the application. During normal edge device re-start cycles it is guaranteed that each edge application receives the same accelerators, which increases robustness of the edge-based computation system 10. However, this comes at the cost of allocating hardware resources even if they are not used, i.e., an edge application not running all the time may block hardware resources.

When the runtime wrapper 6 reports an application-stop event, the corresponding hardware resources are released. In case the runtime wrapper 6 is not reliably performing device deallocation, the allocator service 5 does check periodically or at least before each allocation procedure whether all existing resource allocations are still actively used. If not, a deallocation of resources is carried out. This has the drawback that a delay may exist between the actual time when a hardware resource is no longer in use and when the user gets informed about this via the user interface of the edge-based computing system 10. However, the overall system state does stay consistent.

The edge system operator / administrator of the edge-based computing system 10 can control access of edge applications to hardware resources. For example, an edge application may not be allowed to connect to a camera and to send images from the shop floor to some other computer without prior permission by the system administrator. This implies that the system administrator has the option to override a resource claim issued by an edge application. This can be done in an opt-in or opt-out fashion, i.e., the edge system administrator has to approve all resource claims (e.g., at app installation time) or can optionally change or override resource claims.

The runtime wrapper 6 is adapted to wrap the system runtime of the sandboxed system core 1 of the edge-based computation system 10. The runtime wrapper 6 is a wrapper around the lowest system-level component that launches the sandboxed process (e.g., runs in an OCI environment). When an edge application is started, the runtime wrapper 6 is not only providing the parameters describing the executable process but also the desired hardware resources, i.e., the resource claims made by the respective edge application. This is what the application creator has specified, optionally overridden by the edge system administrator.

The runtime wrapper 6 does send a call to the allocator service 5 with the resource claims indicating the hardware resources desired by the edge applications. The address of the allocator service 5 can be hard-coded, since no discovery is needed as there is only one allocator service 5. The allocator service 5 may respond either with a failure indication in case that no hardware resource is available or because of another error. In this case, the starting of the sandboxed process fails.

In the other case if the allocator service 5 succeeds in allocating and returning device mapping information, the device mapping information is passed onto the lower-level command which starts the sandboxed process with the device mappings enabled.

The format and content of the device mapping information is defined by the sandboxing mechanism. The device mapping information is the sandbox configuration that is required so that the sandboxed process can access the hardware resource in question.

Upon service termination, i.e., after termination of the sandboxed process, the runtime wrapper 6 informs the allocator service 5 again, and the hardware resources are marked as available again. In contrast to applications with privileged access to hardware resources, the hardware access management system 9 for the sandboxed edge-based computing system 10 according to the present invention is flexible while running edge applications in a non-privileged mode. All hardware resources can be used, whether hardware accelerators for machine learning or non-IP peripheral devices.

Resource claims describe the hardware resource requirements of an edge application and can be overridden by the edge system administrator. This makes the edge-based computing system 10 adaptive (no device mappings need to be hardcoded into applications)

Through a combination of multiple resource sharing strategies, the dependency on application start order is minimized if not completely prevented making the edge-based computing system 10 respond in a deterministic way to re-starts of edge applications. Sharing of hardware resources is supported by various strategies allowing the edge system administrator and the edge application to control and supervise the hardware resource sharing. Additionally, statistics can be provided to support users and the edge system administrator in controlling and supervising the application execution and edge device operation.

## Claims

1. A computer-implemented hardware access management method for a sandboxed edge-based computing system (10) comprising the steps of:
providing (S1) by a device service (7) information about hardware resources available in the edge-based computing system (10);
mapping (S2) by an allocator service (5) the available hardware resources to edge applications; and
wrapping (S3) by a runtime wrapper (6) a system runtime of an edge application run as a sandboxed process in a sandboxed edge system core (1) of the edge-based computing system (10).

2. The computer-implemented hardware access management method according to claim 1,
wherein the device service (7) is a stateless service and runs in a privileged mode outside the sandboxed edge system core (1).

3. The computer-implemented hardware access management method according to claim 1 or 2,
wherein the device service (7) comprises stateless device plug-ins (8) which provide information for a certain hardware resource class.

4. The computer-implemented hardware access management method according to any of the preceding claims 1 to 3,
wherein the allocator service (5) is a state-based service and runs in the sandboxed edge system core (1).

5. The computer-implemented hardware access management method according to claim 4,
wherein the allocator service (5) performs a mapping of available hardware resources to the edge applications dynamically and in a deterministic manner and supplies the mapping between the edge applications and the hardware resources to the runtime wrapper (6).

6. The computer-implemented hardware access management method according to any of the preceding claims 1 to 5,
wherein the runtime wrapper (6) is a stateless service and runs outside the sandboxed edge system core (1).

7. The computer-implemented hardware access management method according to any of the preceding claims 1 to 6,
wherein edge system core (1) of the edge-based computing system (10) comprises a user interface (2) for a user a communication interface (3) for remote control.

8. The computer-implemented hardware access management method according to any of the preceding claims 1 to 7,
wherein the edge system core (1) of the edge-based computing system (10) comprises an application manager (4) for edge applications run as sandboxed processes in the sandboxed edge system core (1) according to a wrapped system runtime provided by the runtime wrapper (6).

9. The computer-implemented hardware access management method according to any of the preceding claims 1 to 8,
wherein the edge applications run as sandboxed processes in the sandboxed edge system core (1) process data in real time.

10. The computer-implemented hardware access management method according to any of the preceding claims 1 to 9,
wherein an edge application specifies desired hardware resources in a resource claim.

11. The computer-implemented hardware access management method according to any of the preceding claims 1 to 10,
wherein the runtime wrapper (6) sends a call to the allocator service (5) with resource claims indicating hardware resources desired by one or more edge applications, wherein shared requests for device sharing are enabled by fractional numbers in the resource claims.

12. The computer-implemented hardware access management method according to claim 11, wherein in case that the allocator service (5) succeeds in allocating the desired hardware resources specified by an edge application in a resource claim it returns device mapping information which is passed onto a lower-level command which starts the sandboxed process with the requested hardware resources being marked as unavailable and being enabled for use by the sandboxed process according to the device mapping information.

13. The computer-implemented hardware access management method according to any of the preceding claims 1 to 12 wherein upon termination of a sandboxed process the runtime wrapper (6) informs the allocator service (5) and the hardware resources occupied by the terminated sandboxed process are marked again as available.

14. The computer-implemented hardware access management method according to any of the preceding claims 1 to 13 wherein the edge applications comprise fine grained rules for different user roles including developer, system administrator and device owner.

15. The computer-implemented hardware access management method according to any of the preceding claims 1 to 14, wherein the device service (7) provides meta data, in particular resource metadata, and resource state information for each hardware resource including model name, manufacturer name, health status, resource parameters, in particular temperature.

16. The computer-implemented hardware access management method according to any of the preceding claims 1 to 15,
wherein a pool of devices for shared access and a pool of devices for exclusive access are specified during device configuration.

17. The computer-implemented hardware access management method according to any of the preceding claims 1 to 16,
wherein a hardware resource usage of an edge application is checked periodically by the allocator service (5), wherein if the hardware resource usage exceeds a specified limit a system administrator of the edge-based computing system (10) is informed about this state and/or the edge application is terminated or restarted automatically.

18. The computer-implemented hardware access management method according to any of the preceding claims 1 to 17, wherein after an edge application has been started and allocation of hardware resources has been carried out successfully the device mappings are stored as device hints.

19. The computer-implemented hardware access management method according to claim 18, wherein at a start of the allocator service (5) it is checked for each device type whether a mapping list of hardware resources has changed, wherein if the mapping list has changed all device hints corresponding to the respective device type are removed automatically or after an intervention by a system administrator of the edge-based computing system (10).

20. The computer-implemented hardware access management method according to any of the preceding claims 1 to 19, wherein hardware resource allocation is performed at an installation time of an edge application.

21. The computer-implemented hardware access management method according to any of the preceding claims 1 to 19, if the runtime wrapper (6) is not reliably performing device deallocation the allocator service (5) checks whether existing resource allocations are still actively used.

22. The computer-implemented hardware access management method according to any of the preceding claims 1 to 21, wherein access of edge applications to hardware resources are controlled by a system administrator of the edge-based computing system (10), in particular by overriding a resource claim issued by an edge application.

23. The computer-implemented hardware access management method according to any of the preceding claims 1 to 22, wherein statistics are provided to support users and/or a system administrator of the edge-based computing system (10) in controlling and supervising the application execution and edge device operation.

24. A hardware access management system for a sandboxed edge-based computing system (10) comprising:
a device service (7) adapted to provide information about hardware resources available in the edge-based computing system (10);
an allocator service (5) adapted to map the available hardware resources to edge applications; and
a runtime wrapper (6) adapted to wrap a system runtime of an edge application run as a sandboxed process in a sandboxed edge system core (1) of the edge-based computing system (10).

25. An edge-based computing system (10) comprising a sandboxed edge system core (1) having an allocator service (5) run in the sandboxed edge system core (1) and adapted to map available hardware resources indicated by a device service (7) being run outside the sandboxed edge system core (1) to edge applications in response to resource claims indicating hardware resources required by edge applications received by the allocator service (5) from a runtime wrapper (6) being run outside the sandboxed edge system core (1) and adapted to wrap a system runtime of the edge application run as a sandboxed process in the sandboxed edge system core (1) of the edge-based computing system (10).
